Europäisches Patentamt

European Patent Office

Office européen des brevets

(11) Veröffentlichungsnummer : **0 042 974**
**B1**

(12) EUROPÄISCHE PATENTSCHRIFT

(45) Veröffentlichungstag der Patentschrift :
05.10.83

(51) Int. Cl.³ : **C 09 D 11/10**

(21) Anmeldenummer : 81103994.0

(22) Anmeldetag : 25.05.81

(54) **Wässrige Flexodruckfarbe zum Bedrucken von Tissué-Papier.**

(30) Priorität : 30.06.80 DE 3024646

(43) Veröffentlichungstag der Anmeldung :
06.01.82 Patentblatt 82/01

(45) Bekanntmachung des Hinweises auf die Patenterteilung : 05.10.83 Patentblatt 83/40

(84) Benannte Vertragsstaaten :
AT BE CH FR GB IT LI LU NL SE

(56) Entgegenhaltungen :
LU A 82 084

(73) Patentinhaber : Kapp, Werner
Industriegebiet
D-5429 Miehlen (DE)

(72) Erfinder : Kapp, Werner
Industriegebiet
D-5429 Miehlen (DE)

(74) Vertreter : Hentschel, Peter, Dipl.-Ing.
Hohenzollernstrasse 21
D-5400 Koblenz (DE)

# 0 042 974

## Wäßrige Flexodruckfarbe zum Bedrucken von Tissue-Papier

Die Erfindung betrifft eine wäßrige Flexodruckfarbe zum Bedrucken von Tissue-Papier.

Flexodruckfarben dienen vorwiegend zum Bedrucken von im Haushalt verwendeten Küchenrollen, Servietten, Tischuntersetzern, Handtüchern aus Papier oder dergleichen. Die Farben müssen daher den Bestimmungen des Lebensmittelgesetzes entsprechen, d. h. insbesondere gegenüber Alkalien beständig sein. Beim Drucken sollen sie sich leicht von den Klischees ablösen, damit nicht durch Kleben die Druckqualität beeinträchtigt wird und sich keine Farbe auf den Walzen der Druckmaschinen absetzt.

Wäßrige Flexodruckfarben zum Bedrucken von Tissuepapier sind bereits bekannt. Sie haben im allgemeinen den Nachteil, daß sie gegenüber Alkalien und Alkohol nicht beständig sind. Ihre Druckqualität ist in der Regel schlecht, weil sich die Farbe von den Klischees nicht leicht ablöst, sondern an diesen haften bleibt. Als Folge davon müssen Klischees oft ausgewechselt werden.

In der DE-A 25 52 564 ist eine wäßrige Flexodruckfarbe mit anionischen Farbstoffen und kationischen Bindemitteln beschrieben, die zur Stabilisierung ein flüchtiges Amin enthalten. Als Bindemittel sind in dieser Farbe Polyamidamine eingesetzt, die wegen Verseifung nicht alkalienbeständig sind. Das zugesetzte Kolophoniumharz ist ebenfalls verseifbar, so daß sich lösliche Salze bilden, die wie die Amine den Anforderungen des Lebensmittelgesetzes nicht entsprechen. Der Einsatz von flüchtigen Aminen in der Farbe hat den Nachteil, daß die Flexodruckfarbe erst dann haltbar ist, wenn sich das Amin verflüchtigt hat, was jedoch eine längere Zeit in Anspruch nimmt. Aufgrund der Vielzahl der eingesetzten Bindemittel ist der Feststoffanteil der Farbe hoch, so daß sich die Farbe beim Drucken leicht auf den Walzen der Druckmaschine absetzt und dadurch einen Klebeeffekt auf den Klischees hervorruft, der sich besonders nachteilig auf die Haltbarkeit der Klischees auswirkt. Die anionischen Farbstoffe sind überdies nicht farbstark genug und reichen allenfalls für Pastelltöne. Die verwendeten Farbstoffe werden nur durch das Bindemittel auf dem Papier gehalten, so daß keine Vernetzung erfolgt.

In der SU-A 534 481 sind Druckfarben auf der Basis eines Acryl-Copolymeren beschrieben, die u. a. auf nichtabsorbierendem Substrat und Papier besser haften sollen. Die Druckfarben enthalten 25-35 % eines Copolymeren von Methacrylsäure mit Butylacrylat und Methylmethacrylat, 6-8 % Pigment, 8-12 % Butanol, 3-% Melamin-Formaldehydharz, 1-3 % Polyäthylenwachs und Wasser auf 100 %. Dem angeführten Beispiel zufolge werden folgende Komponenten zusammen vermahlen : 25 % des Acrylcopolymeren, 6 % eines Gelbpigments, 8 % Butanol, 3 % Melamin-Formaldehydharz, 1 % Polyäthylenwachs und Wasser auf 100 %. Der sich hieraus ergebende Trockengehalt beträgt 34 %. Der Anteil des Acrylpolymeren geht mit dem Melamin-Formaldehydharz keine Vernetzung ein, sondern wirkt mit dieser Komponente nur als Bindemittel. Die Herstellung des Farbansatzes ist zeitaufwendig, da die genannte Mischung unter Zusatz von Wasser in Kugelmühlen vermahlen und dann filtriert werden muß, damit eine möglichst kleine Teilchengröße erhalten wird. Das Copolymere wird durch radikalische Copolymerisation von Methacrylsäure mit Butylacrylat und Methacrylat im Gewichtsverhältnis 1 : 4,5 mit Benzoylperoxid als Initiator enthalten. Die Beständigkeit der Farbe ist zwar gut, ihr Druckverhalten jedoch schlecht. Die Farbe baut sich überdies wegen des hohen Feststoffgehaltes nachteilig auf den Druckwalzen der Maschine auf, so daß größere Lösungsmittelmengen erforderlich sind, um das Harz wieder von ihnen abzulösen. Neben diesen Nachteilen ist die Farbe außerdem sehr teuer in der Herstellung.

Aus der GB-A 14 10 172 ist eine Druckfarbe bekannt, die im wesentlichen Wasser, einen Farbstoff und ein Kondensationsprodukt eines Polyäthylenimins enthält. Die Farbe weist keine vernetzenden Komponenten auf und ist stark verseifbar, so daß sie gegenüber Alkalien nicht beständig ist. Sie entspricht auch nicht den vom Lebensmittelgesetz geforderten Beständigkeitswerten gegenüber Wasser und Alkoholen. Die Farbe enthält 45 % Glycerin als Gleitmittel für die Maschinen. Glycerin verzögert jedoch das Trocknen der Farbe auf dem bedruckten Papier, so daß es noch einmal erwärmt werden muß. Für den Flexodruck ist die Farbe daher nicht geeignet. Die Farbe ist zwar billig, setzt sich jedoch stark ab und muß ständig gerührt werden.

Aus der LU-A 82 084 ist eine wäßrige Flexodruckfarbe bekannt, die im wesentlichen Wasser und Kunstharzdispersionen enthält. Als Verdickungsmittel werden bevorzugt Acrylsäurepolymerisate eingesetzt, die mit dem zugesetzten Ammoniak, den Alkoholen und Glykolen in jedem Verhältnis mischbar sind. Diese Farbe ist beständig und entspricht den Vorschriften des Lebensmittelgesetzes. Ihre Vernetzbarkeit liegt jedoch unter 100 % und entspricht daher nicht optimalen Anforderungen.

Der Erfindung liegt daher die Aufgabe zugrunde, eine wäßrige Flexodruckfarbe zum Bedrucken von Tissuepapier vorzuschlagen, die gegenüber Wasser, Alkalien, Fetten, Ölen, Seifen, Alkoholen, Essigsäure und Milchsäure beständig ist und damit den Bestimmungen des Lebensmittelgesetzes entspricht. Die Farbe soll gut verarbeitbar und außerdem preisgünstig herstellbar sein.

Erfindungsgemäß gelöst wird diese Aufgabe durch eine wäßrige Flexodruckfarbe, die aus einer Mischung von

50-höchstens 95 Gew.-% Wasser,
0,5-1,5 Gew.-% Verdickungsmittel,
0,1-0,4 Gew.-% Ammoniak oder organischem Amin,
höchstens 0,05 Gew.-% Entschäumer,

2

3,46-8,00 Gew.-% Farbteige,
ggfs. 1-35 Gew.-% Methanol und
ggfs. 1-10 Gew.-% Butylglykol oder dessen Ester als Lösungsmittel

besteht.

Die mit der Erfindung erzielten Vorteile bestehen insbesondere darin, daß die erfindungsgemäße Flexodruckfarbe gegenüber Wasser, Alkalien, Fetten, Ölen, Seifen, Alkoholen, Essigsäure und Milchsäure beständig ist und damit den Vorschriften des Lebensmittelgesetzes entspricht. Die Farbe löst sich von den Klischees leicht ab und eignet sich daher in besonders günstiger Weise zum Bedrucken von Küchenrollen, Servietten, Tischuntersetzern und Papierhandtüchern. Die Farbe weist eine gute Verarbeitbarkeit auf. Ein wesentlicher Vorteil der erfindungsgemäßen Flexodruckfarbe liegt darin, daß die Druckfarbe nach Aufbringen auf einen Druckträger mit den freien OH-Gruppen der Zellulose des Druckträgers eine vernetzende Wirkung ausübt, so daß ohne höhere Bindemittelanteile optimale Beständigkeitswerte der Farbe erreicht werden.

Eine Ausführungsform der Erfindung sieht vor, daß das organische Amin aus einem Diäthanol- oder Triäthanolamin besteht.

Einer weiteren Ausführungsform der Erfindung zufolge besteht der Entschäumer aus Silikonen oder Mineralölen.

Die Farbteige sind in weiterer Abwandlung der Erfindung feinteigig ausgebildet und enthalten als Farbträger Helioechtblau (Cu-Phthalocyaninpigment), Helioechtgelb (Monoazopigment) und/oder Colanyl.

In weiterer Ausgestaltung der Erfindung enthalten die organischen oder anorganischen Farbteige wasserlösliche oder in Wasser dispergierbare nichtionogene oder anionenaktive Tenside, deren Tensidgehalt zwischen 2 und 15 Gew.-% der Farbteige liegt. Als anionenaktive Tenside können beispielsweise Natriumsalze eines substituierten Sulfo-Fettsäureesters, eine Kombination von paraffinsulfosaurem Natrium mit einem Alkylpolyglykoläther sowie ein anionenaktives Formaldehyd-Kondensationsprodukt von Naphthalinsulfosäuren eingesetzt werden.

Anstelle der Farbteige können in der Erfindung auch Trockenpulverpigmente eingesetzt werden, die Tenside als Zusatzmittel enthalten.

Die Erfindung wird anhand der folgenden Ausführungsbeispiele näher erläutert :

### Beispiel 1

#### (Rezeptur « Blau » mit 100 %iger Vernetzung)

| | |
|---|---|
| Wasser | 94,74 Gew.-% |
| Verdickungsmittel : | |
| Polymerisate der Polyacryl- und Polymethacrylsäure | 1,50 Gew.-% |
| Diäthanol- oder Triäthanolamin | 0,25 Gew.-% |
| Entschäumer aus Silikonen von höchstens | 0,05 Gew.-% |
| Farbteig (Färbungsmittel) : | |
| Helioechtblau-Feinteig (Cu-Phthalocyaninpigment) | 2,75 Gew.-% |
| Helioechtgelb-Feinteig (Monoazopigment) | 0,47 Gew.-% |
| Colanyl (Grün)-Feinteig | 0,24 Gew.-% |
| | 100,00 Gew.-% |

### Beispiel 2

#### (Rezeptur « Braun » mit 100 %iger Vernetzung)

| | |
|---|---|
| Wasser | 77,36 Gew.-% |
| Verdickungsmittel : | |
| Polymerisate der Polyacryl- und Polymethacrylsäure | 1,40 Gew.-% |
| Ammoniak 25 %ig | 0,20 Gew.-% |
| Methanol | 10,00 Gew.-% |
| Butylglykol | 3,00 Gew.-% |
| Entschäumer aus Silikonen | 0,04 Gew.-% |
| Farbteig (Färbungsmittel) : | |
| Helioechtgelb-Feinteig (Monoazopigment) | 3,50 Gew.-% |
| Colanyl (Grün)-Feinteig | 3,50 Gew.-% |
| Helioechtblau-Feinteig (Cu-Phthalocyaninpigment) | 1,00 Gew.-% |
| | 100,00 Gew.-% |

Die in der Erfindung verwendeten nichtionogenen Tenside mit gleichzeitig emulgierender Wirkung sind Arylpolyglykolester sowie Polyglykolester höhermolekularer Carbonsäuren. Als weitere Tenside kommen für die Erfindung anionische, nichtionogene und kationenaktive Tenside infrage, die mit amphoteren Substanzen auf der Basis von Alkylimidazolin oder eines Alkylolaminsalzes einer substituierten Aminsäure mischbar sind sowie Salze von Polycarbonsäuren und hochmolekulares, sulfatisiertes Naphthalinkondensat.

## Ansprüche

1. Wäßrige Flexodruckfarbe zum Bedrucken von Tissue-Papier, dadurch gekennzeichnet, daß dieselbe aus einer Mischung von

50-höchstens 95 Gew.-% Wasser,
0,5-1,5 Gew.-% Verdickungsmittel,
0,1-0,4 Gew.-% Ammoniak oder organischem Amin,
höchstens 0,05 Gew.-% Entschäumer,
3,46-8,00 Gew.-% Farbteige,
ggfs. 1-35 Gew.-% Methanol und
ggfs. 1-10 Gew.-% Butylglykol oder dessen Ester als Lösungsmittel

besteht.

2. Wäßrige Flexodruckfarbe nach Anspruch 1, dadurch gekennzeichnet, daß das organische Amin aus einem Diäthanol- oder Triäthanolamin besteht.

3. Wäßrige Flexodruckfarbe nach Anspruch 1, dadurch gekennzeichnet, daß der Entschäumer aus Silikonen oder Mineralölen besteht.

4. Wäßrige Flexodruckfarbe nach Anspruch 1, dadurch gekennzeichnet, daß die organischen oder anorganischen Farbteige feinteilig ausgebildet sind und als Färbungsmittel Helioechtblau (Cu-Phthalocyaninpigment), Helioechtgelb (Monoazopigment) und/oder Colanyl enthalten.

5. Wäßrige Flexodruckfarbe nach den Ansprüchen 1 und 4, dadurch gekennzeichnet, daß die organischen oder anorganischen Farbteige wasserlösliche oder in Wasser dispergierbare nichtionogene oder anionenaktive Tenside enthalten, deren Tensidgehalt zwischen 2 und 15 Gew.-% der Farbteige liegt.

6. Wäßrige Flexodruckfarbe nach Anspruch 1 und 4 dadurch gekennzeichnet, daß anstelle der Farbteige Trockenpulverpigmente einsetzbar sind, die Tenside als Zusatzmittel enthalten.

## Claims

1. Water-based flexographic ink for use in printing on tissue paper, characterised by the fact that the same is made up of a mixture of

50-maximum 95 weight % water,
0.5-1.5 weight % inert agents,
0.1-0.4 weight % ammonia or organic amine,
a maximum of 0.05 weight % antifoaming agent,
3.46-8.0 weight % colour pastes,
possibly 1-35.0 weight % methanol and
possibly 1-10.0 weight % or the ester of the same as solvent.

2. Water-based flexographic ink as in claim 1, characterised by the fact that the organic amine consists of a diethanol or triethanol amine.

3. Water-based flexographic ink as in claim 1, characterised by the fact that the antifoaming agent is made up of silicones or mineral oils.

4. Water-based flexographic ink as in claim 1, characterised by the fact that the organic or anorganic colour pastes are formed of fine paste and contain toluidine blue toner (Cu phthalocyanine pigment), toluidine yellow toner (monoazoic pigment) and/or colanyl.

5. Water-based flexographic ink as in claims 1 and 4, characterised by the fact that the organic or anorganic colour pastes contain non-ionogenic or anionic active tensides which are soluble or dispersable in water, the tenside content of which is between 2 and 15 weight % of the colour pastes.

6. Water-based flexographic ink as in claims 1 and 4, characterised by the fact that dry powder pigments containing tensides as additives can be used instead of the colour pastes.

## Revendications

1. Couleur d'impression flexographique aqueuse pour l'impression de papier-tissu, qui se distingue par la composition suivante :

50 à 95 % e. p. d'eau
0,5 à 1,5 % e. p. d'épaississant
0,1 à 0,4 % e. p. d'ammoniaque ou amine organique
au max. 0,05 % e. p. d'agent anti-mousse
3,46 à 8,0 % e. p. de pâtes de couleur
évtl. 1 à 35 % e. p. de méthanole et
évtl. 1 à 10 % e. p. de glycole butylique ou l'ester de celui-ci comme agent dissolvant.

2. Couleur d'impression flexographique aqueuse conformément à la spécification 1, qui se distingue par le fait que l'amine organique est une amine de diéthanole ou de triéthanole.

3. Couleur d'impression flexographique aqueuse conformément à la spécification 1, qui se distingue par le fait que l'agent anti-mousse consiste en silicones ou huiles minérales.

4. Couleur d'impression flexographique aqueuse conformément à la spécification 1, qui se distingue par le fait que les pâtes de couleurs organiques ou inorganiques sont des pâtes fines contenant, à titre d'agents colorants, du bon bleu (pigment phtalocyanine de cuivre), du bon jaune (pigment monoazoïque) et/ou du colanyle.

5. Couleur d'impression flexographique aqueuse conformément aux spécifications 1 et 4, qui se distingue par le fait que les pâtes de couleurs organiques ou inorganiques contiennent des tensio-actifs non-ionogènes ou aniono-actifs qui sont solubles ou dispersables dans l'eau et dont la présence dans les pâtes est d'environ 2 à 15 % du poids des pâtes.

6. Couleur d'impression flexographique aqueuse conformément aux spécifications 1 et 4, qui se distingue par le fait que l'on peut utiliser, au lieu des pâtes de couleurs, des pigments de poudre sèche contenant des tensio-actifs.